(19) Europäisches Patentamt
European Patent Office
Office européen des brevets

(11) **EP 1 749 466 B1**

(12) **EUROPEAN PATENT SPECIFICATION**

(45) Date of publication and mention
of the grant of the patent:
**30.07.2008 Bulletin 2008/31**

(51) Int Cl.:
*A47J 36/34* (2006.01)       *A47G 19/08* (2006.01)
*A47G 23/03* (2006.01)

(21) Application number: **06016099.1**

(22) Date of filing: **02.08.2006**

(54) **Heat-resistant glass table mat**

Hitzebeständiger Untersetzer aus Glas

Dessous résistant à la chaleur en verre

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **05.08.2005 DK 200500180 U**

(43) Date of publication of application:
**07.02.2007 Bulletin 2007/06**

(73) Proprietor: **Noga v/Niels Henriksen
7000 Fredericia (DK)**

(72) Inventors:
• **Henriksen, Niels
7000 Fredericia (DK)**
• **Olsen, Anne Mette
7000 Fredericia (DK)**

(74) Representative: **Nielsen, Leif et al
c/o Patrade A/S,
Fredens Torv 3A
8000 Aarhus C (DK)**

(56) References cited:
**DE-U1- 29 521 382        DE-U1-3202004 004
58
US-A- 4 550 894**

## Description

## Field of the Invention

The present invention relates to a table mat element, which mainly is applied in sets of three or more, with transparent and shiny properties well suited for high temperatures where the table mat element is made of coherent sub-elements, where each sub-element has at least one first contact surface that points towards a table/base and at least one second contact surface that points in the opposite direction than the at least one first contact surface, where the at least one second surface has a smaller area than the at least one first contact surface.

## Description of the Prior Art

Table mats belongs to the known technology and they are indented to protect table top surfaces or tablecloths against damage due to heat or mechanical influence. Table mats are made with heat protection as primary functionality and with design as a secondary functionality. The functionality of design is normally indented to create a unique product by itself and to a minor extent in order to assign an inferior rank to other elements related to the action of setting a table.

Table mats must be capable of resisting high temperatures, because one should be able to take dishes directly from ovens, directly from a hot plate or from a fireplace and place them on the table, without damaging the table and/or the tablecloth. Accordingly, the table mat must prevent the heat from being conducted to the base and hence prevent the base from being heated to a temperature, at which it would be damaged. Several materials that can resist high temperatures are available, but these materials are normally non-transparent except for certain high-temperature polymers (e.g. sulphone polymer) or glass. The transparent materials are associated with other problems, due to which they are not applied for table mat purposes. Transparent high-temperature polymers are, by way of example, associated with limits of application regarding temperatures above approximately 250° C, which has the consequence that the polymer can be deformed or discoloured if the surface temperature of the table mat exceeds this temperature. Consequently, table mats intended for high temperatures are often made in non-transparent materials.

From US 4,550,894 a set of table mats with a ring formed shape is known. The single table mat ring is with a larger contact area towards the table than the area facing the object placed on top of the table mat. This table mat is preferably made with a sealing property on the contact surfaces e.g. silicone rubber. By this sealing an insulated area between the table and the object on the table mat is surrounded by the ring shaped tablemat. Thereby achieving a closed volume of insulating air, form which there are no convection and thus a poor heat transfer from the object to the table.

The tablecloth is often an essential element in relation to the action of setting a table. By setting a table the visual impression of the accessories placed on the table cloth is often reduced. The use of transparent tableware (table mats, plates and dishes) will emphasize the design of the tablecloth or the structure of the table top to a greater degree than traditional tableware.

Glass is a highly heat resistant material regarding deformation and discolouring, but unfortunately glass is very sensitive to the thermal stresses that occur in the material during thermal impact. Glass is a poor heat conductor and huge temperature differences may occur in the material in the case of local thermal impact. Due to the different temperatures the glass will expand more in the hot areas and less in the cold areas and hence thermal stresses, which may cause cracking, will occur.

An other problem that often is associated to table mats is the transport of a hot object from one area of the table to another area of the table, as it requires cooperation between two individuals at the table, where one individual raises and moves the hot object and where the other individual moves the table mat to another area of the table.

It is the object of the invention to disclose a table mat element and a method to manufacture such table mat intended to protection of the table top against heat from hot dishes, pots or the like, where the table mat element is transparent and/or with shiny properties, where no critical thermal stress occurs in the table mat element in use.

## Description of the Invention

A table mat element according to the invention is made of coherent sub-elements, where each sub-element has at least one first contact surface that points towards a table/base and at least one second contact surface that points in the opposite direction than the at least one first contact surface, where the at least one second surface has a smaller area than the at least one first contact surface. By such construction one achieve a limited contact area between the table mat and the hot object, which is placed on the base, and hereby it is assured that the heat transfer from the hot object to the table mat and from the table mat to the base (the tablecloth/table) is minimized.

The heat transfer between two components and the ambient air can be described simplified by using the following formulas:

$$T_v - T_{bs} = (Q_1/A_1) \cdot (1/h_1)$$

$$T_{bs} - T_b = (Q_2/A_2) \cdot (1/h_2)$$

$$T_{bs} - T_1 = (Q_3/A_3) \bullet (1/h_3)$$

Where:

$T_v$ = the temperature of the hot object
$T_{bs}$ = the temperature of the table mat
$T_b$ = the temperature of the table/base
$T_1$ = the temperature of the ambient air
$(Q_1/A_1)$ = heat flux (W/m$^2$) between the hot object and the table mat.
$(Q_2/A_2)$ = heat flux (W/m$^2$) between the table mat and the base.
$(Q_3/A_3)$ = heat flux (W/m$^2$) between the table mat and the ambient air.

Q denotes the heat transfer and A is the contact area between the two objects involved

$h_1$ = the overall coefficient of heat transfer (W/m$^2$K) between the hot object and the table mat (physical constant).
$h_2$ = the overall coefficient of heat transfer (W/m$^2$K) between the table mat and the base (physical constant).
$h_3$ = the overall coefficient of heat transfer (W/m$^2$K) between the table mat and the ambient air (physical constant that, among other things, is a function of the velocity of the air near the table mat).

It is assumed that the heat transfer $Q_1$ equals the heat transfer from $Q_2 + Q_3$ after some time with contact, and that the table mat hereafter has a largely constant temperature. If it furthermore is assumed that the temperatures $T_v$ and $T_{bs}$ as well as the overall coefficient of heat transfer $h_1$ are given quantities, it means that the heat transfer $Q_1$ to the table mat is low when the contact area $A_1$ between the hot object and the table mat is small.

At the same time, a table mat according to the invention assures that a maximal transfer of heat to the ambient air in proportion to the transfer of heat to the base (the table cloth/table) will occur, in other words $Q_3$ will be larger than $Q_2$.

The low heat flux between the hot object and the table mat will secure a slow glass heat-up and thereby prevent large gradients that may cause thermic breakage of the material, from occurring in the material. Another way of preventing thermic breakage is to make the table mats in small dimensions and shapes that enable maximal degree of free expansion of the material, whereby no critical tensions will occur in the material.

The table mat element according to the invention is made out of coherent sub-elements, which comprise glass hemispheres, glass pyramids or glass cones that are vitrified or cast in a coherent manner.

Table mats according to the invention comprise small particular constituent parts made of glass that combined work as table mat and, by virtue of being made in a transparent or shiny material, brings additional beauty to the a well-spread table.

A preferred variant of a table mat element according to the invention have a first contact surface that is porous or rough surface. This surface can be provided by placing the first contact surface on a rough or porous surface during the casting operation or heat treatment process. Alternatively, the surface can be treated mechanically into a rough or porous surface after the casting operation or heat treatment process.

In practice this rough or porous surface has the effect that the contact area to the base (the table/tablecloth) is minimized. By, as far as possible, striving towards the glass being hemisphere-shaped it is achieved, that the area in contact with the ambient air is maximized in proportion to the area having contact with the hot object. Pyramid or cone-like shapes will also assure this. The small parts (hemispheres, pyramids, cones or the like) are vitrified in clusters or are cast in a coherent manner in clusters so that they cannot tilt.

The constituent parts are typically made in glass, and three or more table mat elements are typically applied on one table. The glass elements are being limited in physical dimension and the contact points to the hot object have limited size in proportion to the total size of the table mats. Compared with the base, the glass constituent part can, as mentioned, be manufactured in such a manner that the base (tablecloth/table) contact also is limited, which for instance can be assured by cast/ heat treatment of the table heat unit on a rough surface in an oven.

A sufficient amount of constituent parts are suitably spaced and distributed across the table, which is why it is not necessary to move the table mat but only the hot object.

Another problem that often is associated with table mats is transport of a hot object from one area of the table to another area of the table, as it often requires cooperation between two individuals at the table. The problem of having to move the table mat and the hot object at the same time can easily be eliminated by a table mat according to the invention.

At a stage when the hot object not yet is on the table or when the hot object is removed from the table, the units will serve as table decoration.

The table mat elements can also be made in non-transparent glass in order to provide special surface structure, in which the light of the room and the table mats can interact.

**Short Description of the Drawing**

The invention is described further with reference to the drawing, where:

FIG. 1    shows five table mats placed on a base.
FIG. 2    shows a top view of a table mat element.

FIG. 3    shows side view of a table mat element.

FIG. 4    shows a bowl placed on table mat elements.

## Detailed Description of the Invention

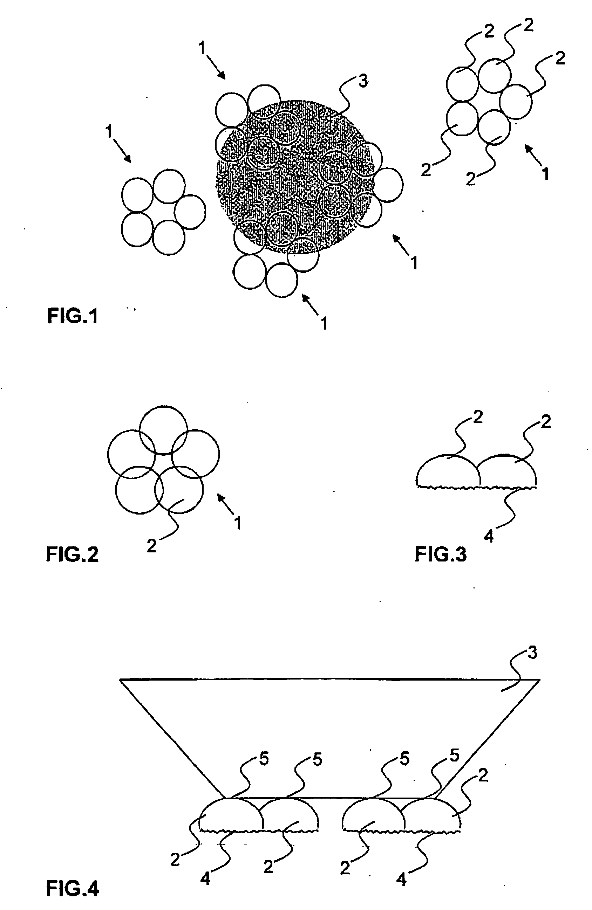

In the figures 1-4 table mat elements 1 according to the invention are shown. By use of the table mat elements 1 three or more elements 1 are typically applied, where coherent sub-elements 2, at the location at which the hot object 3 has to be placed on the base, stand on a small upwards facing contact surface (e.g. a hemisphere, pyramid or cone).

In figure 1 is shown that the table mat elements 1 are spread on a table/base and the hot object 3 can be moved on the base as long as it is in contact with a sufficient number of table mat elements - typically three.

In figure 2 is shown an example of a table mat element that, in the example, comprises five coherent sub-elements 2 - either vitrified or cast together. This is done in order to prevent tilting and in order to provide a harmonious expression.

Figure 3 shows a side view of a table mat element, where two neighbour sub-elements 2 are vitrified.

The contact between the table mat elements 1 and a hot object 3 and the base is illustrated in figure 4. In the example a deformed hemisphere is applied. It can be seen that the contact surface 5 between the hot object 2 and the table mat elements is small so that it only provides for a limited heat transfer. The bottom surface 4 is made rough in order to reduce the heat transfer from the product to the base.

## Claims

1.    Table mat element (1), which mainly is applied in sets of three or more, with transparent and shiny properties well suited for high temperatures, where the table mat element (1) is made of coherent sub-elements (2), where each sub-element (2) has at least one first contact surface (4) that points towards a table/base and at least one second contact surface (5) that points in the opposite direction than the at least one first contact surface (4), where the at least one second surface (5) has a smaller area than the at least one first contact surface (4), **characterized in that** the coherent sub-elements (2) comprise vitrified glass hemispheres, glass pyramids or glass cones or that the coherent sub-elements (2) comprise glass hemispheres, glass pyramids or glass cones that are cast in a coherent manner.

2.    Table mat element according to claim 1, **characterized in that** the first contact surface (4) of the table mat has a porous or rough surface.

3.    Method for manufacturing of a table mat element according to claim 2, **characterized in that** the first contact surface (4) of the table mat element is placed on a rough or porous surface during the casting operation or heat treatment process.

4.    Method for manufacturing of a table mat element according to claim 2, **characterized in that** the first contact surface (4) of the table mat element is treated mechanically into a rough or porous surface after the casting operation or heat treatment process.

## Patentansprüche

1.    Tischmattenelement (1), welches im wesentlichen in Sätzen von drei oder mehreren appliziert wird, mit durchsichtigen und glänzenden hochtemperaturgeeigneten Eigenschaften, wobei das Tischmattenelement (1) von zusammenhängenden Unterelementen (2) hergestellt ist, wobei jedes Unterelement (2) zumindest eine erste auf einen Tisch/eine Basis orientierte Berührungsfläche (4) und zumindest eine zweite in die entgegengesetzte Richtung der ersten Berührungsfläche orientierte Berührungsfläche (5) aufweist, wobei die zumindest eine zweite Fläche (5) eine kleinere Fläche als die der zumindest einen ersten Berührungsfläche (4) aufweist, **dadurch gekennzeichnet, dass** die zusammenhängenden Unterelemente (2) verglaste Glashalbkugeln, Glaspyramiden oder Glaskonen umfassen, oder dass die zusammenhängenden Unterelemente (2) in zusammenhängender Weise gegossene Glashalbkugeln, Glaspyramiden oder Glaskonen umfassen.

2.    Tischmattenelement nach Anspruch 1, **dadurch gekennzeichnet, dass** die erste Berührungsfläche (4) der Tischmatte eine poröse oder raue Oberfläche aufweist.

3.    Verfahren zur Fertigung eines Tischmattenelements nach Anspruch 2, **dadurch gekennzeichnet, dass** die erste Berührungsfläche (4) des Tischmattenelements während des Gußvorganges oder des Heizbehandlungsvorganges an einer rauen oder porösen Oberfläche angebracht wird.

4.    Verfahren zur Fertigung eines Tischmattenelements nach Anspruch 2, **dadurch gekennzeichnet, dass** die erste Berührungsfläche (4) des Tischmattenelements nach dem Gußvorgang oder dem Heizbehandlungsvorgang mechanisch zu einer rauen oder porösen Oberfläche behandelt wird.

## Revendications

1.    Élément de dessous de plat (1), qui est appliqué principalement en série de trois ou plus, en qualité transparente et brillante bien approprié pour des hautes températures, l'élément de dessous de plat (1) étant formé de sous-éléments assemblés (2), chaque sous-élément (2) comportant au moins une première surface de contact (4) dirigée vers une table/base et au moins une seconde surface de contact (5) dirigée dans la direction opposée à au moins la première surface de contact (4), la seconde surface (5) au moins comprenant une surface plus petite que la première surface de contact au moins **caractérisé en ce que** les sous-éléments assemblés (2) comprennent des hémisphères en verre vitrifiée, des pyramides en verre vitrifiée ou des cônes en verre vitrifiée ou que les sous-éléments assemblés (2) comprennent des hémisphères en verre, des pyramides en verre ou des cônes en verre moulés de façon assemblée.

2. Élément de dessous de plat selon la revendication 1, **caractérisé en ce que** la première surface de contact (4) du dessous de plat comprend une surface poreuse ou rugueuse.

3. Méthode de fabrication d'un élément de dessous de plat selon la revendication 2, **caractérisée en ce que** la première surface de contact (4) du dessous de plat est posée sur une surface rugueuse ou poreuse pendant l'opération de moulage ou le procès de traitement de chaleur.

4. Méthode de fabrication d'un élément de dessous de plat selon la revendication 2, **caractérisée en ce que** la première surface de contact (4) de l'élément de dessous de plat est traitée de façon mécanique pour une surface rugueuse ou poreuse après l'opération de moulage ou le procès de traitement de chaleur.

**FIG.1**

**FIG.2**

**FIG.3**

**FIG.4**

**EP 1 749 466 B1**

**REFERENCES CITED IN THE DESCRIPTION**

**Patent documents cited in the description**

- US 4550894 A